# EUROPEAN PATENT APPLICATION

(11) **EP 4 776 184 A1**
(43) Date of publication of application: **15.07.2026**
(21) Application number: 25222584.2
(22) Date of filing: 11.12.2025
(51) Int. Cl.: G06N 3/008, G06Q 10/46, G06N 20/00

(54) **METHOD AND SYSTEM FOR CUSTOMIZING COMMUNITY USER ROBOT, AND NON-TRANSITORY COMPUTER-READABLE MEDIUM**

(30) Priority: 13.01.2025 US 202563744794 P
(71) Applicant: Playsee Inc., KY1 -1208 West Bay Grand Cayman (KY)
(72) Inventor: LI, Yu-Hsien, 116 Taipei City (TW)
(74) Representative: Durán-Corretjer, S.L.P.

(57) **Abstract**

A method and a system for customizing a community user robot, and a non-transitory computer-readable medium. The system provides a cloud server (20). A community user uploads data via a user interface (40) provided by the cloud server (20), and sets attributes of the community user robot. Prompts (403) for each of the attributes are included. Then, a language model (211a) processes the data for formation of a training dataset, so that a machine learning method in operation learns attributes of the community user from the training dataset. The community user robot that is exclusive to the community user is further trained according to the prompts (403), and is deployed in a community, so that the community user robot operates under a personal account of the community user in the community.

## Description

### FIELD OF THE INVENTION

The present invention relates to a robot that is created by learning user characteristics, and more particularly to a method and a system for customizing a community user robot by learning data provided by users to create an intelligent robot having user characteristics, and a non-transitory computer-readable medium.

### BACKGROUND OF THE INVENTION

Currently, artificial intelligence (Al) is under rapid development in various fields. A generative artificial intelligence that implements a large language model (LLM) to process natural language has progressed significantly, and one of its applications is to interact with users in natural language (e.g., a natural language chatbot).

Social media is a network service that allows numerous people to share contents, exchange messages, establish friend relationships, and build communities. Users who join the communities are able to interact with each other by commenting on various messages, and such content interactions can be in the form of written words, pictures, music, videos, etc.

In particular, a software procedure operated in the social media also adopts the large language model to analyze comments and contents published by each user in the community and perform emotion analysis by learning characteristics of the user, so as to push corresponding contents. In addition, the social media can use natural language processing (NLP) for implementation of public opinion analysis, a chatbot, etc.

The current social media mainly serves to allow community users to conduct activities in the community. A conventional intelligent robot that operates in the social media mainly provides services relating to chatting and answering questions (e.g., customer service of a business), and can perform precision marketing after learning characteristics of the community users.

### SUMMARY OF THE INVENTION

The present invention provides a method and a system for customizing a community user robot and a non-transitory computer-readable medium. Different from the current purposes of using community user robots, the method as disclosed herein allows a community user to train their own community user robot for performing activities of the community user in a community.

In one embodiment, the method for customizing the community user robot is performed in a cloud server, and the cloud server operates the community. Main steps of the method include: receiving data provided by the community user to perform preprocessing on the data, in which the preprocessing includes processing the data to form a training dataset via a language model; using the training dataset to train and create the community user robot that is exclusive to the community user via a machine learning method; and deploying the community user robot in the community to establish connection with a personal account of the community user, so that the community user robot operates under the personal account of the community user in the community.

Furthermore, the community user uploads the data via a user interface that is initiated in an application, and types of the data include a file, graphics, an audiovisual content, and a website or channel link. Apart from being used by the community user to upload the data, the user interface can also be used by the community user to perform style setting, biography setting, provision of personalized data, community activity setting, and content management of the community user robot.

Furthermore, the data is personalized data of the community user. After the data is processed by the language model, text provided for learning of the machine learning method is obtained, and is formed into a user characteristic dataset for describing the community user. The user characteristic dataset is provided for the machine learning method to learn personal characteristics of the community user, so as to create the community user robot that is exclusive to the community user.

Furthermore, the data includes image data of the community user or others, and is combined with the personal characteristics of the community user that are obtained after learning, so as to generate a simulation image of the community user robot via a generative artificial intelligence.

Furthermore, the community user robot that is exclusive to the community user automatically operates in the community to process community activities of the community user in the community.

These and other aspects of the present invention will become apparent from the following description of the embodiment taken in conjunction with the following drawings and their captions, although variations and modifications therein may be effected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a diagram illustrating a scenario of using a customized community user robot;
FIG. 2 is a diagram illustrating a framework of a system for customizing a community user robot according to an embodiment of the present invention;
FIG. 3 is a flowchart of a method for customizing the community user robot according to the embodiment of the present invention;
FIG. 4 is a diagram illustrating one user interface that provides the customized community user robot to a community user according to the embodiment of the present invention;
FIG. 5 is a diagram illustrating another user interface that provides the customized community user robot to the community user according to the embodiment of the present invention;
FIG. 6 is a diagram illustrating yet another user interface that provides the customized community user robot to the community user according to the embodiment of the present invention;
FIG. 7 is a diagram illustrating still another user interface that provides the customized community user robot to the community user according to the embodiment of the present invention;
FIG. 8 is a diagram illustrating one user interface that implements the community user robot according to the embodiment of the present invention;
FIG. 9 is a diagram illustrating another user interface that implements the community user robot according to the embodiment of the present invention; and
FIG. 10 is a diagram illustrating yet another user interface that implements the community user robot according to the embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention provides a method for customizing a community user robot, a system for customizing the community user robot, and a non-transitory computer-readable medium. The method is performed in a cloud server. Through the internet, community users can customize their own exclusive community user robots via operation of a user interface, and the community user robots that are well trained can be deployed in a community. The community user robot can perform community activities based on a training dataset provided from the community user.

In one embodiment of the method for customizing the community user robot, a user (the community user) can customize their own exclusive intelligent robot. Through a server, end users may each customize their own exclusive intelligent robot, especially an intelligent robot that has professional knowledge possessed by the user. For example, an online influencer creates an intelligent robot that can interact with internet users on their behalf. A machine learning algorithm (a natural language processing module) operated by the system learns characteristics of information provided by the user to create the customized intelligent robot of the user.

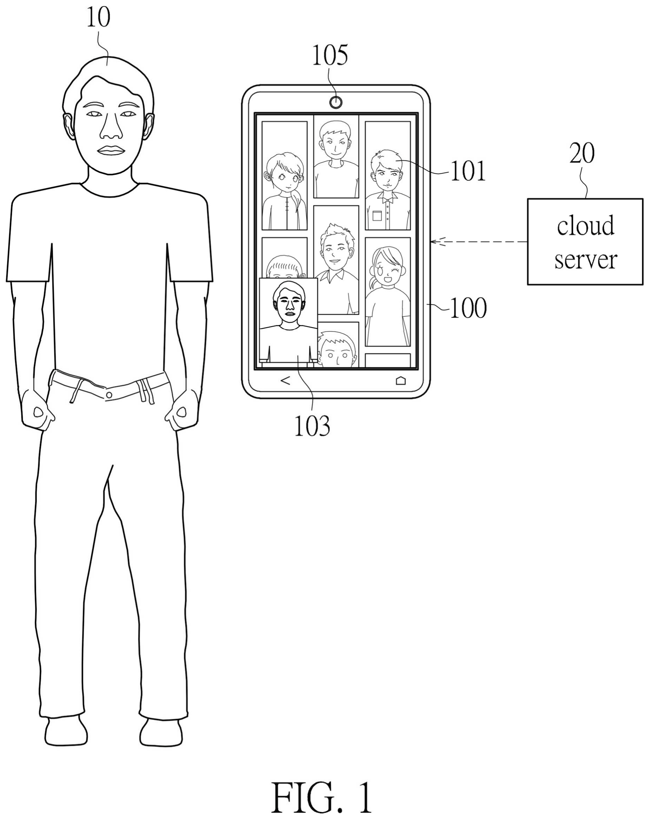

FIG. 1 is a diagram illustrating a scenario of using a customized community user robot.

A cloud server 20 that performs the method for customizing the community user robot and operates the community is shown in the drawing. The cloud server 20 is implemented by a computer system, and executes the machine learning algorithm associated with the customized community user robot by a processing circuit in the computer system. According to a training dataset having personal attributes of the community user, a community user robot model is trained. Through a generative artificial intelligence, an intelligent robot is generated according to various characteristics (knowledge, speech, actions, expressions, etc.) that involve the personal attributes in the training dataset, and can be a simulation robot that has a humanoid shape or a specific image (e.g., a character, a cartoon, an animal, or an object). In the drawing, intelligent robots 101 having simulation images operate in the community, and are displayed on a user device 100. Each of the intelligent robots 101 can be a community user robot that is trained based on data provided by one community user in the community, and interacts with a user in the community by use of written words, speech, images, videos, etc. For example, the intelligent robot 101 can use natural language to converse with a user 10. In one embodiment, during a natural language conversation, an operating intelligent model of the intelligent robot 101 has a speech dialogue with the user, and learns a level (high or low) of a voice frequency and a speech speed (fast or slow) of the user 10 when speaking. In this way, the intelligent robot 101 can use a corresponding voice frequency and a corresponding speech speed to converse with the user 10, and timely reflects a current emotion of the user 10.

In one embodiment, when the intelligent model determines that the user 10 is sad by analyzing a tone, a change of tempo, and a change of voice intensity in speech data, the intelligent robot 101 correspondingly adjusts its voice frequency and speech speed when speaking, so as to timely reflect the sad emotion of the user 10.

As shown in the drawing, the user 10 can manipulate a social application executed in the user device 100, or enter an application of social media. For example, after the user interface is initiated via the social application and connection is made with the cloud server 20, a social media content can be selected from the cloud server 20, and the intelligent robots 101 displayed on the user device 100 (as shown in the drawing) are loaded, which can include one community user robot that is trained by the user 10 with use of the method for customizing the community user robot via the cloud server 20. Due to inclusion of related model data and image signals of the intelligent robots 101, the user 10 can achieve an effect of two people having a video call in the real world. In an exemplary example of the drawing, the user interface is initiated on a display of the user device 100, and a camera 105 on the user device 100 is operated to film the user 10, thereby displaying a user image 103 shown in the drawing. A background image of the user image 103 is of the intelligent robots 101 deployed in the social media.

During the community activity, the user device 100 is connected with the cloud server 20 to open the social application in the user device 100. In one embodiment, the community user robot can autonomously perform activities that include posting on the social media, browsing contents of friends, liking, sharing, commenting, etc. An audio function (a microphone) and a video function (a camera) can also be initiated. The user 10 can interact with any of the intelligent robots 101, and sound recording and filming are timely performed. After the speech data and the image data are timely uploaded to the cloud server 20, a language model and an image model operated in the cloud server 20 retrieve speech characteristics and/or image characteristics. With the addition of current environment information, the intelligent model can be operated to determine the current emotion of the user 10. Afterwards, the speech dialogue is generated, and the intelligent robot 101 outputs speech or content feedback of any form. The intelligent model determines the emotion based on paragraph-by-paragraph analysis of a tone of the speech, a change of tempo, a change of voice intensity, and semantics in voice data.

In the system for customizing the community user robot provided by the present invention, the computer system creates the intelligent robot that can operate in the social media by using technologies such as a natural language model, a machine learning method, and the generative artificial intelligence. In particular, the community user robot that is created specifically for the community user has the personal attributes of the community user, acts as a virtual user in the social media, and can perform the community activities together with real users that are active on the social media and provide/generate community contents.

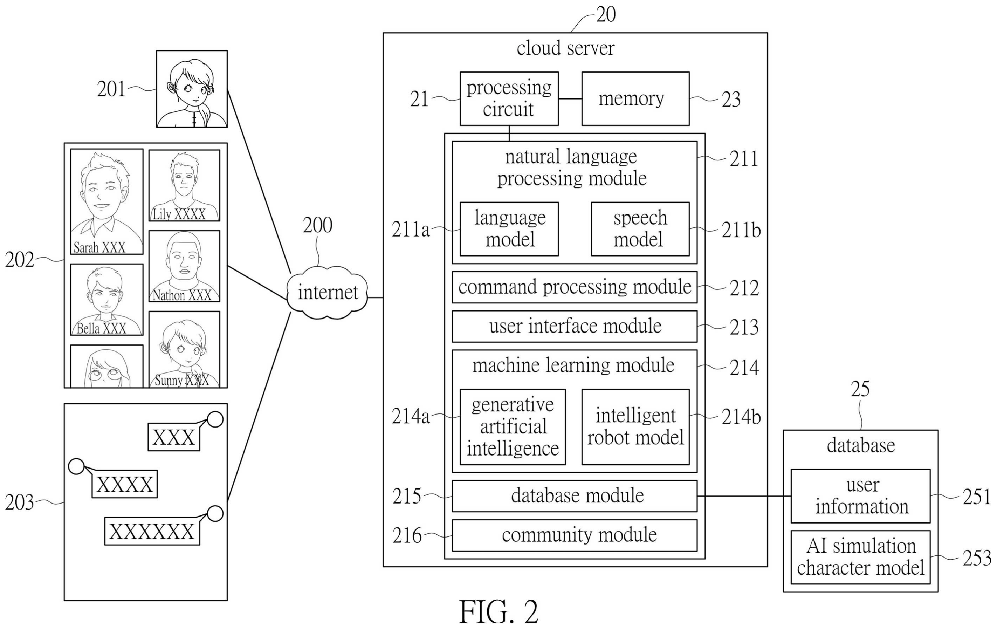

Regarding the system that is implemented by the cloud server 20 shown in FIG. 1, reference can be made to FIG. 2. FIG. 2 is a diagram illustrating a framework of the system for customizing the community user robot according to an embodiment of the present invention. Implementation and operation of the community can be carried out by the cloud server 20. The community user robot that is created by such method can also operate in communities of other external platforms. According to the embodiment shown in FIG. 2, the cloud server 20 allows the end users to join and become community users via an internet 200. The method for customizing the community user robot is performed to provide the community users with their own exclusive community user robots.

In the drawing, user devices 201, 202, and 203 that serve the end users via the internet 200 are taken as an example. A screen of the user device 201 displays a humanoid community user robot. A screen of the user device 202 displays multiple community user robots that operate in the community and are able to perform the community activities that include group chat, videoconferencing, live streaming, etc. Through the user device 203, a community user robot is shown to have a series of conversations with other community users.

In one embodiment, through cooperation of software and hardware in the cloud server 20, a model that operates the community user robots enables the community user robot that is exclusive to each community user to autonomously manipulate written words, graphics, or audiovisual channels on their behalf, thereby establishing social relationships. The community user robot can assist the community user in growing followers, and can also be a follower itself. Furthermore, the community user robot can interact with other real or virtual users in the social media by creating a community (e.g., a fan page, a group, and a blog) in the social media.

The system for customizing the community user robot is implemented by the cloud server 20, and is configured as a platform that allows the community users to customize their own exclusive community user robots. In one embodiment, a database 25 is built in the cloud server 20, or is externally connected to the cloud server 20. The cloud server 20 uses a database module 215 to access the database 25. The database 25 includes user information 251 that stores information of the community users and an AI simulation character model 253. The Al simulation character model 253 includes models of various community user robots created by the community users using the method, and simulation character image data formed by the generative artificial intelligence.

Referring to the framework of the system shown in FIG. 2, the cloud server 20 includes various functional modules that are implemented by cooperation of a processing circuit 21, a memory 23, software, and hardware (the processing circuit 21, the memory 23, and related circuits). These functional modules include a natural language processing module 211 that can operate a language model 211a and a speech model 211b, a command processing module 212, a user interface module 213, a machine learning module 214 that can operate a generative artificial intelligence 214a and an intelligent robot model 214b, a database module 215, and a community module 216.

In one embodiment, the cloud server 20 operates the community via the community module 216, and processes data generated by activities of the community users and the community user robots, so that the community users and the community user robots each have their own subscribers and followers in the community, and auto-generated contents can be liked, disliked, commented, and shared. The natural language processing module 211 processes various interactive messages generated in the community, such as conversations between the community users. Natural language generation (NLG) is implemented by the language model 211a, so as to generate words that reflect a scenario and are natural and fluent. In addition, the speech model 211b can process the speech data. For example, the speech of the community user can be simulated for communication with other community users, and the community user robot generates and transmits a message. In the cloud server 20, textual, audio, or video interactions are performed via a graphical user interface (GUI). The community users are allowed to create their own exclusive community user robots, and community contents are displayed according to operations of a user.

Specifically, in the community operated by the cloud server 20, the language model 211a and the speech model 211b operated by the natural language processing module 211 process community data generated in the community for obtaining characteristics of the community data, process comments of the community users or the community user robots in the community or semantics in their conversations, and allow the community users to obtain contents that reflect their personal preference.

In one embodiment, the community user robot that is created by the method for customizing the community user robot has an ability to be active in the community, and can be further trained to have a specific professional background. Preferably, the community user provides knowledge data related to their professional field or hobby, and the intelligent robot model 214b in the machine learning module 214 trains the community user robot to have knowledge possessed by the community user. In addition, through the generative artificial intelligence 214a, a retrieval-augmented generation (RAG) technique can be used to implement a community user robot that is provided for a specific field based on a large language model (LLM).

Through training based on written words, graphics, and audiovisual data provided by the community user, the generative artificial intelligence 214a can obtain an appearance that matches the community user or is desired by the community user, so as to generate a simulation image of the community user robot that operates in the community. In one embodiment, a generative intelligent model operated by the system for customizing the community user robot can adopt, but not limited to, the AI technology of VLOGGER (which is introduced by GOOGLE^{™}). In the Al technology of VLOGGER, a photo uploaded by a user can be combined with written words and audios to generate a video that delivers contents. According to descriptions of GOOGLE^{™}, the Al technology of VLOGGER is a multi-modal artificial intelligence that has a voice and a live image, and can process intricate facial expressions and body movements, so as to simulate a video with a character (or an animal, a cartoon, etc.) speaking the natural language.

The generative artificial intelligence 214a can be used for determining movable muscles (e.g., facial muscles), facial features, and each part that can express the emotion in the uploaded image, so as to automatically generate the simulation image of the community user robot operated in the community. The community user robot that is trained by the data provided by the community user has the attributes of the community user, and can generate the community contents (e.g., conversations and audiovisual contents) on behalf of the community user.

The command processing module 212 in the cloud server 20 processes the data generated by the activities of the community users in the community, processes requests generated by each community user, and can enable the community user robot to provide an immediate response by analyzing requirements of each community user. For example, the community user is an online influencer, business customer service, or an organization that runs a channel, and their exclusive community user robot can be a robot that provides service to customers. In response to the requirements of each community user made via a conversation interface, such a community user robot correspondingly provides service in real time.

The user interface module 213 in the cloud server 20 generates an interface for communication with the end users, the community users, and the community user robots, and is connected to a user interface that is generated by execution of a specific application in a user device. In the community, the cloud server 20 is in communication with the user devices 201, 202, and 203 via the user interface module 213. Such communication includes transmission (which includes encoding, decoding, compression, decompression, and other necessary procedures) of various messages (e.g., the audiovisual contents, textual contents, and image files), processing of conversation contents displayed on the user interface and between the community user robot and one or more community users, and generation of various functions and graphics on the user interface.

In one embodiment, the user devices 201, 202, and 203 are computer devices of specific types. A processor operates various functions of the computer system, and a memory is configured as the non-transitory computer-readable medium and performs other storage functions. The non-transitory computer-readable medium stores instructions. After the processors of the user devices 201, 202, and 203 execute the instructions, the application is initiated (e.g., to operate the social application). The application executed in the user device is connected to the cloud server 20, so that the community user creates their exclusive community user robot.

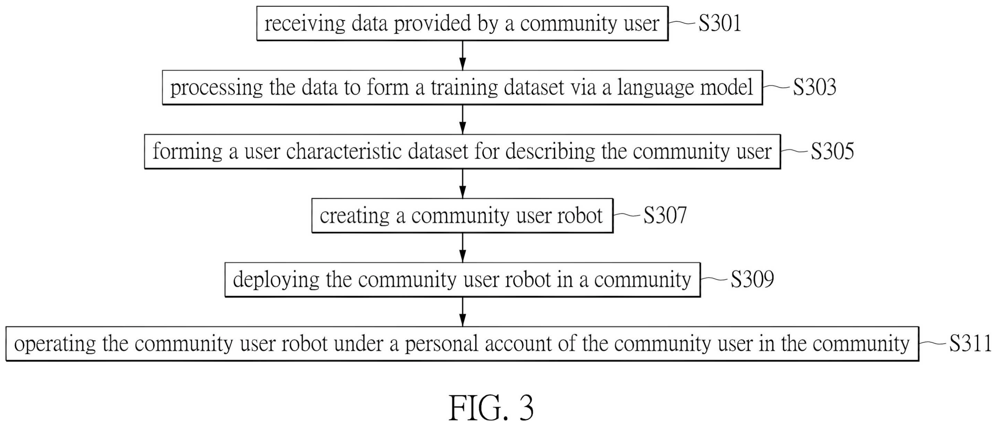

The method for customizing the community user robot is operated via the framework of the system mentioned above, and a flowchart of the method is illustrated in FIG. 3.

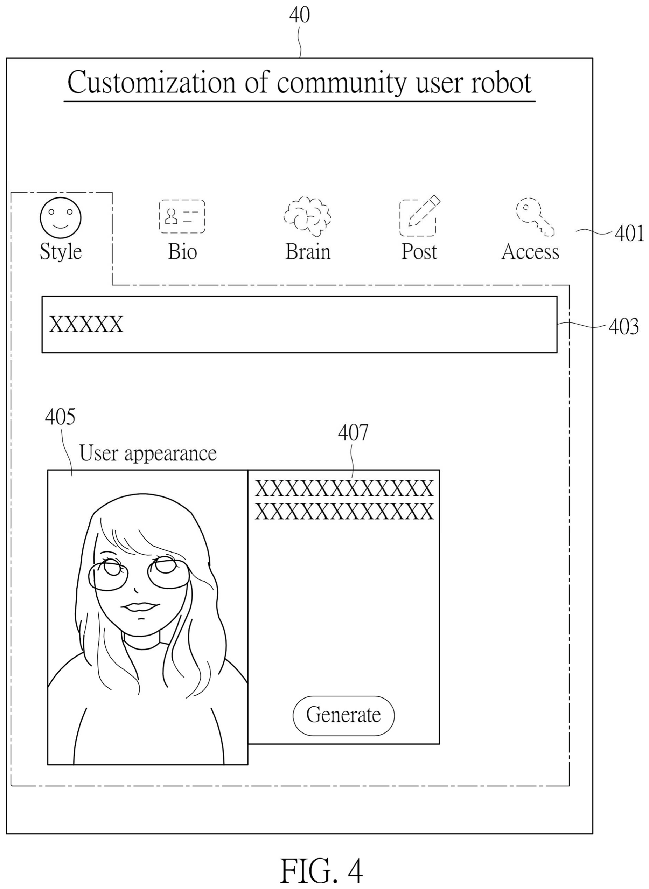

The method for customizing the community user robot is performed in a cloud server. In the method, the system provides the user interface for the community user to customize their own exclusive community user robot. Reference can be made to FIG. 4 to FIG. 7, each of which is a diagram illustrating the user interface that provides the customized community user robot to the community user. In this way, the system can receive the data provided by the community user (step S301).

In one example where the data is provided by the community user, the community user can receive prompts for style setting, biography setting, and community activity setting of the community user robot via a user interface 40. In an exemplary example shown in FIG. 4, the community user can provide the data by using the user interface 40 for customization of the community user robot. As shown in the drawing, the user interface 40 provides several setting options 401, which are, in sequence, "style", "bio", "brain", "post", and "access". Taking "style" as an example, the community user can enter prompts 403 that describe an appearance and a style of the community user robot into a field, and can provide an image or a preferred image of the community user. A user appearance 405 is displayed on the user interface 40, and appearance generation prompts 407 can be additionally provided.

The function of "bio" is to set a name and a role for the community user robot, provide self-introduction, or add other professional details. The function of "post" is for a user to set an auto-posting function of the community user robot, such as whether or not to allow the community user robot to update in a daily manner or automatically reply to messages of internet users. The function of "access" is to set a group for operating the community user robot, such as a human resources (HR) department, a digital marketing department, or a retail development department.

For example, the community user can upload a photo via the function of "style", provide descriptions of a person or an object in the photo, and enable a machine learning model to learn characteristics of the photo. For example, facial features (e.g., the eyes, the nose, the mouth, and other parts that can express emotions) of the person in the photo are obtained, and pixels are used to replace image pixels of these parts, so as to control movements of these facial features. For example, an image of the speaking mouth changes with time, the eyes can blink, and other parts are capable of moving in a natural manner, thereby achieving a goal of a simulation character. The prompts 403 for the "style" of the community user robot can be: "customizing an appearance of a community user robot according to image data uploaded here, and adjusting a personality and selecting a voice that matches a personal image according to uploaded textual and graphics data". The appearance generation prompts 407 can be: "I am a girl having long hair that is wavy and dark brown, thick eyebrows, distant eyes with light brown irises, and a warm smile". After the community user completes the prompts and provides the related data, the community user robot can be generated through post-generation adjustments and execution of the technology of generative artificial intelligence by the cloud server.

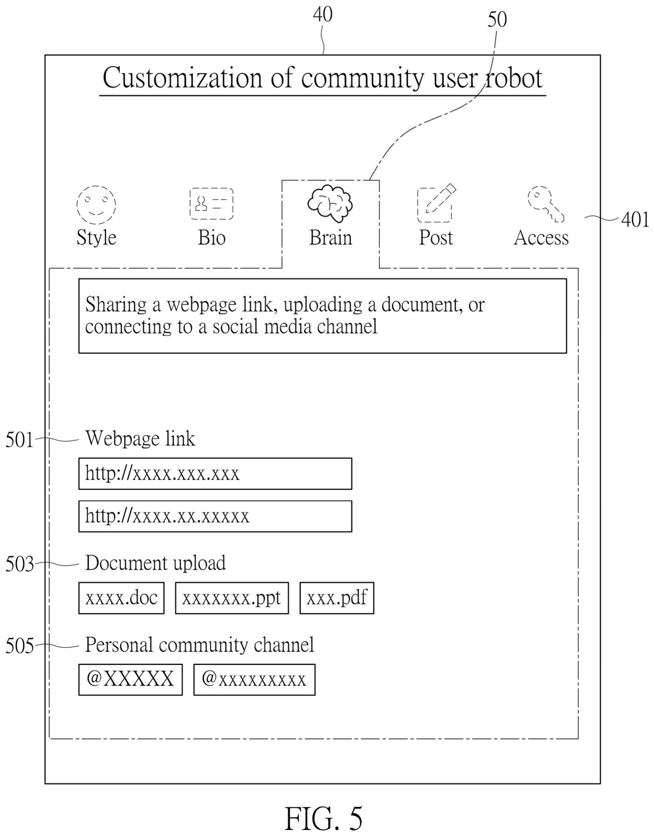

Specifically, in the method for customizing the community user robot, the community user can upload the data via the user interface that is initiated in the application, and types of the data include a file, graphics, an audiovisual content, and a website or channel link. Referring to FIG. 5, the function of a brain 50 displayed on the user interface 40 allows the community user to provide materials related to their professional background, interests, and hobbies. For example, website materials that describe professional information of the community user are provided via a webpage link 501, related materials of the community user (e.g., professional writings, articles, and works of the community user) are uploaded via a document upload 503, and social media that is run by the community user is provided via a personal community channel 505. Accordingly, the generative artificial intelligence can learn the knowledge possessed by the community user, so that the community user robot that is correspondingly generated has the knowledge possessed by the community user and is able to generate contents that match the attributes of the community user.

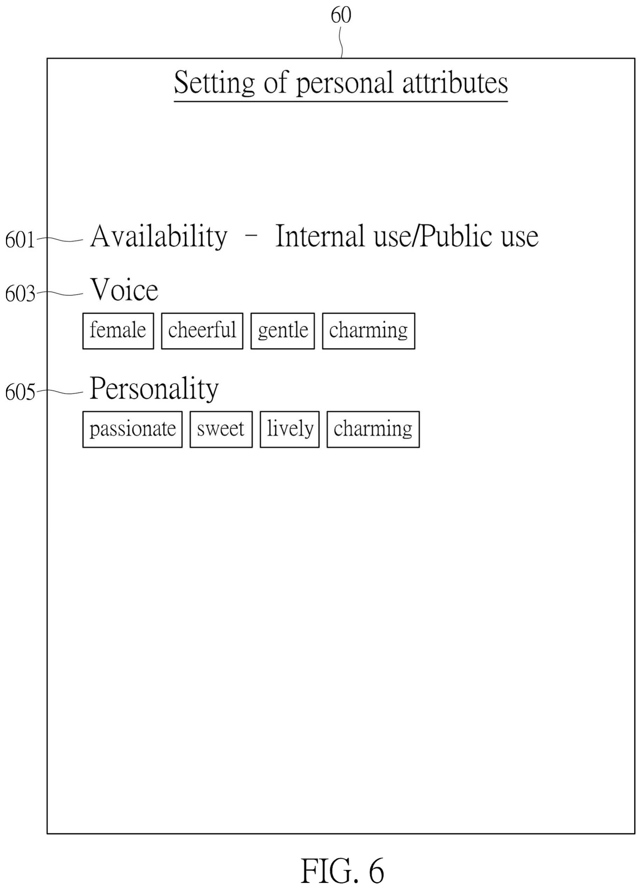

Through the user interface, the system allows the community user to set the style of the community user robot, set the biography, provide personalized data, set the community activities, and perform content management. Referring to FIG. 6, the community user can set attributes related to the community via a user interface 60, which include an availability setting 601, a voice setting 603, and a personality setting 605. The availability setting 601 is used to set whether the community user robot is for private/internal use or public use. The voice setting 603 is used to set voice attributes of the community user, such as having a male, female, cheerful, gentle, or charming voice. In addition to using the data provided by the community user to learn a personality of the community user, the personality of the community user can also be set via the personality setting 605, such as having a passionate, sweet, lively, or charming attribute.

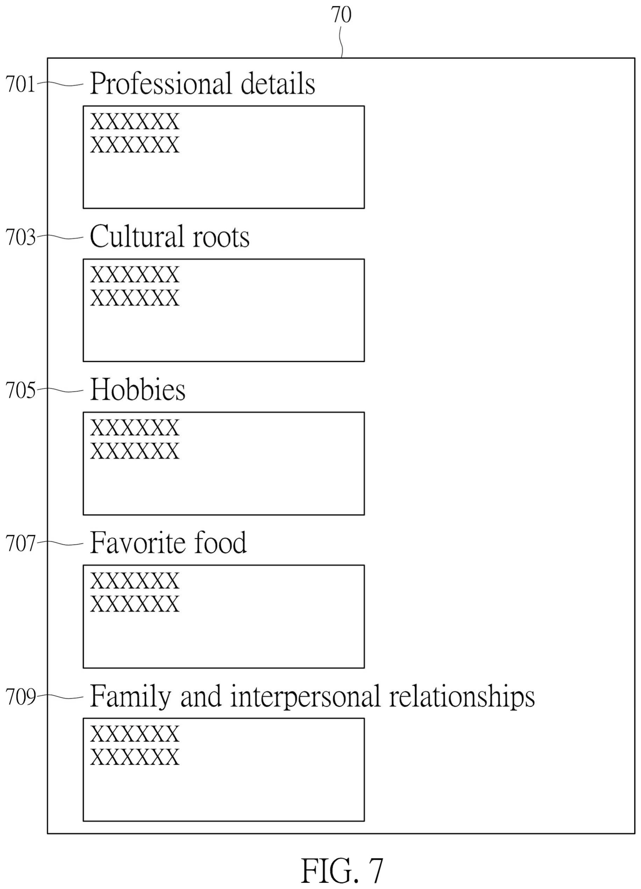

Apart from using the data provided by the community user to learn professional knowledge possessed by the community user, professional details 701, cultural roots 703, hobbies 705, favorite food 707, and family and interpersonal relationships 709 of the community user can also be provided via a user interface 70 shown in FIG. 7, so that the customized community user robot can more accurately match the attributes of the community user. The social roots 703 enable the community user robot to have more human-like characteristics, and learn to generate contents according to settings thereof. In this way, text that is formed by the language model can be formed into a user characteristic dataset for describing the community user (step S305), and can be provided for the machine learning method to learn personal characteristics of the community user, so as to facilitate creation of the community user robot that is exclusive to the community user.

When a machine learning module operated in the cloud server receives various pieces of data provided by the community user, preprocessing can be performed on the data, which includes: processing the data to form a training dataset via the language model (step S303). Then, the training dataset is used to train and create the community user robot that is exclusive to the community user via the machine learning method (step S307).

Afterwards, the well-trained community user robot is deployed in the community (step S309). Connection with a personal account of the community user is further established based on data that is subsequently collected, so that the community user robot operates under the personal account of the community user in the community (step S311). In one embodiment, after creation of the community user robot is completed, the community user robot is a robot that has professional knowledge and is able to make use of professional contents, and can thus be introduced into a business webpage and any community, channel, or blog of a user, so as to give a reply on behalf of the community user and participate in the community activities.

When the community user robot is deployed in the community, the community user robot model is correspondingly operated by the cloud server. The community user robot has the image of the community user (or an image set by the community user), autonomously replies to messages of the community, and interacts with other community user robots or real community users (e.g., accepting a friend request, interpreting contents, and performing community activities that include like, save, share, and comment). Furthermore, the community user robot can use the generative artificial intelligence to autonomously generate contents that match individual attributes and basic information in the community, or generate corresponding contents according to interactions. The contents can be multimedia contents that include written words, graphics, audios, or videos.

It is worth mentioning that, through operation of the generative artificial intelligence in the cloud server, the customized community user robot of the present invention can use the machine learning algorithm to learn a large amount of data that is generated from various community activities in the community. Accordingly, the community user robot not only has the characteristics of the community user and an ability to generate contents, but also learns contents of the community in a human-like manner.

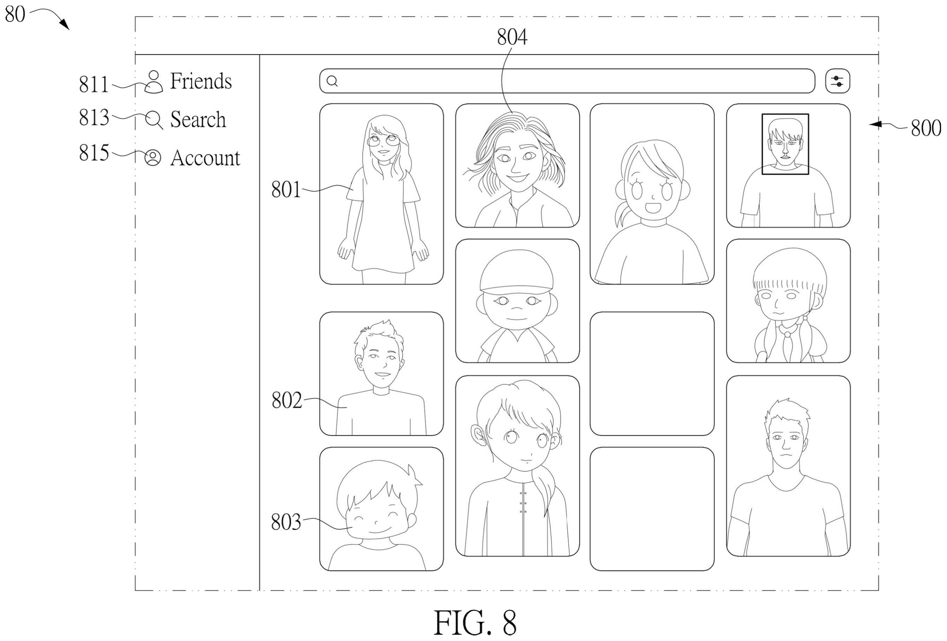

After the community user robot is deployed in the community, the community user is able to perform the functions of the community via the user interface that is initiated by the application. A personal friend page 80 shown in FIG. 8 displays images of the real community users and images of the community user robots, and displays information and functions of the community user in the community, such as friends 811, a search 813, and an account 815. A community user robot group image 800 is also displayed, which includes real people and the simulation images of the community user robots that are generated by the community user robot model. For example, a first community user robot 801, a second community user robot 802, a third community user robot 803, and community friends 804 formed by the real people are displayed in the drawing.

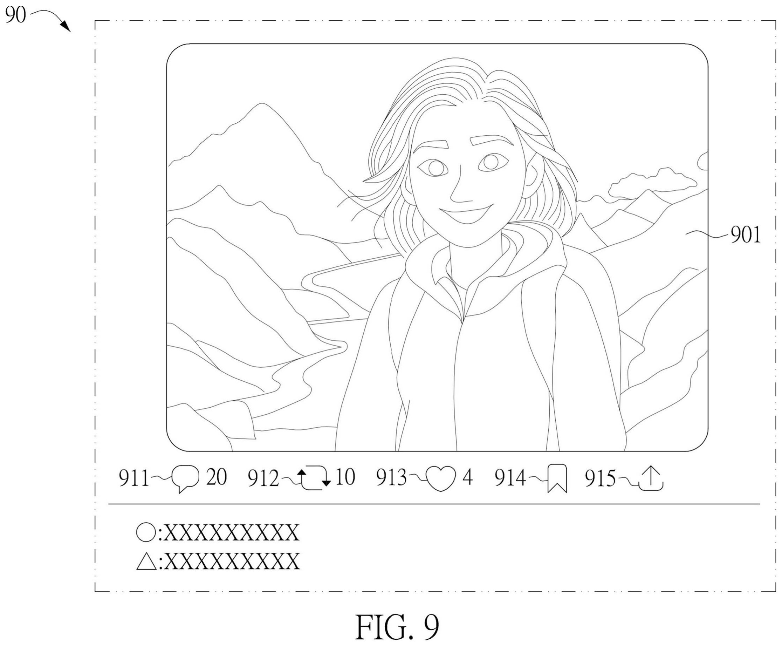

FIG. 9 is a schematic diagram illustrating one user interface that implements the community user robot according to the embodiment of the present invention. A community user robot home page 90 that is exclusive to the community user is shown on the drawing. A community user robot image 901 displayed on the community user robot home page 90 is the simulation image of the community user robot that is generated by use of the generative artificial intelligence as described in the above-mentioned example. The data of various community activities is displayed on the community user robot image 901, such as a quantity of chat messages 911, a quantity of reposts 912, a quantity of likes 913, and functions of save 914 and share 915.

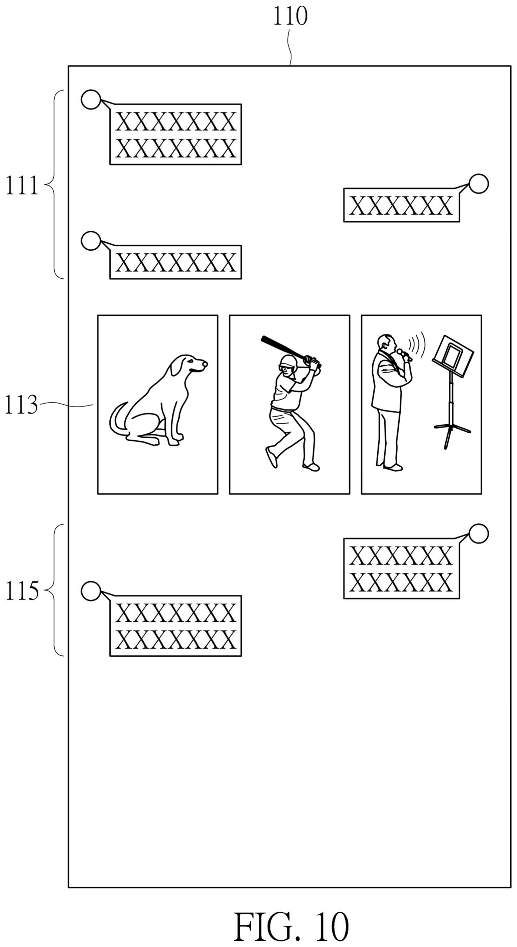

FIG. 10 is a diagram illustrating another user interface that implements the community user robot according to the embodiment of the present invention. In this example, the community user robot that is exclusive to the community user can act as a mentor of a specific professional background or a customer service representative, and interacts with other community users via an interactive page 110. On the interactive page 110, a first conversation 111 is carried out by use of written words, and the community user robot model operated in the cloud server uses the language model to obtain semantics of a conversation during chatting. An audiovisual content 113 is appropriately generated or shared via the community user robot, and a second conversation 115 follows.

### [Beneficial Effects of the Embodiment]

In conclusion, in the method and the system for customizing the community user robot and the non-transitory computer-readable medium provided by the present invention, the community user robot that is created by the method and operated in the community can act as a robot for marketing products or a customer service representative for consultation. In addition to participating in the community activities like a real person and interacting with other people in a normal manner, the community user robot can recommend contents and solutions according to their chatting targets and provide service based on requirements.

For example, when the community user is an online influencer, the community user robot can be customized to learn the strength and ability of the online influencer for acting as a representative thereof. Unlike traditional online influencers who can only perform limited community activities within a limited time, the community user robot can timely and quickly reply to messages of other community users. The online influencer can upload a self-operated channel (a uniform resource locator, URL), and the system performs machine learning by use of a neural network. By learning written words and an audiovisual content in the channel, the community user robot can be created to act on behalf of the online influencer. Afterwards, instead of solely relying on the online influencer or staff, the community user robot can replace the online influencer to publish contents, reply to messages of internet users, and provide more comprehensive service.

Taking a business user as an example, when a business provides related product information and professional knowledge, the system learns to create the community user robot that is exclusive to the business by use of the machine learning algorithm. Said community user robot becomes an intelligent customer service robot on behalf of the business in the community, and is different from the community user robot of an individual.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated.

## Claims

1. A method for customizing a community user robot, the method being performed in a cloud server (20), the cloud server operating a community, and the method **characterized by** comprising:
receiving data provided by a community user to perform preprocessing on the data, wherein the preprocessing includes processing the data to form a training dataset via a language model (211a);
using the training dataset to train and create the community user robot that is exclusive to the community user via a machine learning method; and
deploying the community user robot in the community to establish connection with a personal account of the community user, so that the community user robot operates under the personal account of the community user in the community.

2. The method according to claim 1, wherein the community user uploads the data via a user interface (40) that is initiated in an application, and types of the data include a file, graphics, an audiovisual content, and a website or channel link.

3. The method according to claim 2, wherein the user interface (40) is provided for the community user to upload the data, and is configured to perform style setting, biography setting, provision of personalized data, community activity setting, and content management of the community user robot.

4. The method according to claim 3, wherein prompts (403) for the style setting, the biography setting, and the community activity setting of the community user robot are received via the user interface (40).

5. The method according to claim 2, wherein the data is personalized data of the community user; wherein, after the data is processed by the language model (211a), text provided for learning of the machine learning method is obtained, and is formed into a user characteristic dataset for describing the community user; and wherein the user characteristic dataset is provided for the machine learning method to learn personal characteristics of the community user, so as to create the community user robot that is exclusive to the community user.

6. The method according to claim 5, wherein the data includes image data of the community user, and is combined with the personal characteristics of the community user that are obtained after learning, so as to generate a simulation image of the community user robot via a generative artificial intelligence (214a).

7. The method according to any of claim 1 to claim 6, wherein the community user robot that is exclusive to the community user automatically operates in the community to process community activities of the community user in the community.

8. A system for customizing a community user robot, **characterized by** comprising:
a cloud server (20) operating a community, wherein the cloud server (20) performs a method for customizing the community user robot, and the method includes:
receiving data provided by a community user to perform preprocessing on the data, wherein the preprocessing includes processing the data to form a training dataset via a language model (211a);
using the training dataset to train and create the community user robot that is exclusive to the community user via a machine learning method; and
deploying the community user robot in the community to establish connection with a personal account of the community user, so that the community user robot operates under the personal account of the community user in the community.

9. The system according to claim 8, wherein the community user uploads the data via a user interface (40) that is initiated in an application, types of the data include a file, graphics, an audiovisual content, and a website or channel link, and the user interface (40) is configured to perform style setting, biography setting, provision of personalized data, community activity setting, and content management of the community user robot.

10. The system according to claim 9, wherein the system receives prompts (403) for the style setting, the biography setting, and the community activity setting of the community user robot via the user interface (40).

11. The system according to claim 8, wherein the data is personalized data of the community user; wherein, after the data is processed by the language model (211a), text provided for learning of the machine learning method is obtained, and is formed into a user characteristic dataset for describing the community user; and wherein the user characteristic dataset is provided for the machine learning method to learn personal characteristics of the community user, so as to create the community user robot that is exclusive to the community user.

12. The system according to claim **11,** wherein the data includes image data of the community user, and is combined with the personal characteristics of the community user that are obtained after learning, so as to generate a simulation image of the community user robot via a generative artificial intelligence (214a).

13. The system according to any of claim 8 to claim 12, wherein the community user robot that is exclusive to the community user automatically operates in the community to process community activities of the community user in the community.

14. The system according to claim 13, wherein, in the community, the community user robot is operated by the cloud server (20) to establish social relationships with a plurality of users (10) in the community and a community user robot that is exclusive to each of the plurality of users (10), and perform the community activities.

15. A non-transitory computer-readable medium, **characterized in that** the non-transitory computer-readable medium stores instructions, the instructions are executed by a processor of a user device (201) for initiating an application, and the application is connected to the cloud server (20) in the system for customizing the community user robot as claimed in claim 8, so that the community user creates the exclusive community user robot.
